# EUROPEAN PATENT SPECIFICATION

(11) **EP 2 869 915 B1**
(45) Date of publication and mention of the grant of the patent: **23.05.2018**
(21) Application number: 13734085.7
(22) Date of filing: 04.07.2013
(51) Int. Cl.: B01F 5/06, A01J 11/16

(54) **HOMOGENIZER VALVE AND METHOD**
HOMOGENISATORVENTIL UND VERFAHREN
VANNE D'HOMOGÉNÉISATEUR ET PROCÉDÉ

(30) Priority: 05.07.2012 SE 1250783
(43) Date of publication of application: 13.05.2015
(73) Proprietor: Tetra Laval Holdings & Finance SA, 1009 Pully (CH)
(72) Inventor: HANSSON, Rikard, S-241 35 Eslöv (SE)
(74) Representative: Tetra Pak - Patent Attorneys SE
(86) International application number: PCT/EP2013/064183
(87) International publication number: WO 2014/006155

(56) References cited:
- EP-A1- 1 195 190
- EP-A2- 0 428 318
- WO-A1-98/47606
- DD-A1- 155 504
- FR-A1- 2 939 423

## Description

### Technical Field of the invention

The present invention relates to a homogenizer valve comprising a pressurised, movable forcer, a valve seat member and a valve housing surrounding the forcer and the valve seat member, the forcer and the valve seat member being disposed such that a homogenization gap is obtained between them.

### Background

Homogenization is an industrial process which has long been in use, wherein a liquid to be homogenized, such as a fat emulsion such as, for example, milk, is subjected to a force to split the largest fat globules into smaller fat globules and by such means stabilise the fat emulsion. With regard to for example milk, this implies that cream settling is prevented, and the greater part of all consumer milk today is homogenized.

The homogenization normally takes place by a mechanical processing, such that the fat emulsion, which is at a high input pressure, is forced to pass at high speed through a very tight gap where the fat globules of the emulsion are broken up as a result of the turbulence which occurs at high speeds and by cavitation bubbles which implode in the liquid. The process takes place during a very short period of time and what happens during this period of time is that the speed of the fat emulsion on passage increases while the pressure reduces, with the result that the liquid will boil.

A homogenizer consists essentially of a large piston pump which gives a high pressure, forcing the liquid to be homogenized towards and through a gap between a forcer and a valve seat, where the homogenization is effectively taking place. The forcer and the valve seat are normally rotationsymmetric and are disposed such that, between these two parts, a radial throttle occurs, which constitutes a homogenization gap. The height, width and length of the gap determine the volume at which the homogenization takes place. This volume should be as small as possible in order to obtain an efficient homogenization. The gap height is reduced at a higher pressure of the liquid which is to be homogenized, at the same time as a greater flow implies that the gap height is increased.

WO 98/47606 discloses a homogenizer valve, comprising a pressurized, movable forcer in form of a valve cone, a valve seat member, and a valve housing which surrounds the cone and the seat. The valve cone has a circular forcer plate with concentric channels distributed in correspondence with concentric channels of the seat, such that the gaps are formed between the inner edge of the through hole of the valve member and the edges of the concentric channels of the valve member and the concentric channels of the forcer and the outer edge of the forcer. The ring-shaped parts of this valve member are kept together with narrow bridges, thus delimiting the homogenization effect around the channels. Also, the gap length is delimited by the diameter of the concentric channels, which also limits the volume at which the homogenization takes place. In the homogenization of pasteurized milk, compared with UHT-treated milk, use is made of lower pressure at the same time as the intention is to increase the flow quantity. This implies in turn that the homogenizer valve member would need to be made larger, to allow for greater diameter of the concentric channels thereof. Consequently, the costs for such a homogenizer valve increase accordingly. Additionally, it would be beneficial if it would be possible to increase turbulence and cavitation downstream from the valve member, to allow for even more efficient homogenization, in turn allowing for smaller and/or more efficient homogenizers, with the possibility of cheaper homogenization equipment. Further prior art is reflected by patent documents DD155504A1 (which discloses a homogenizer valve seat member according to the preamble of claim 1), FR2939423A1 and EP1195190A1. It would thus be advantageous to if a new homogenizer, and more specifically new interaction between the forcer and the valve seat, could be obtained that increased the possibility of up-scaling.

### Summary of the invention

Consequently, the present invention seeks to mitigate, alleviate, eliminate or circumvent one or more of the above-identified deficiencies in the art and disadvantages singly or in any combination by providing a homogenizer valve seat member as defined by claim 1. A forcer for a homogenizer is also disclosed, said forcer comprising a forcer head, said forcer head having a central axis and at least one end surface perpendicular to the central axis, said forcer comprising a plurality of holes extending axially through the forcer head, wherein at least one hole of said plurality of holes forms a continuous mouth edge on said end surface, wherein the central axis of the forcer head is positioned outside said continuous mouth edge.

Additionally, a homogenizer device in accordance with claim 8 is also provided. Still further, a method for homogenizing a liquid in accordance with claim 9 is also provided. Further advantageous features of the invention are defined in the dependent claims. In addition, advantageous features of the invention are elaborated in embodiments disclosed herein.

More particularly, according to a first aspect it is disclosed a homogenizer valve seat member with a central axis, comprising a valve seat plate, said valve seat plate having two end surfaces perpendicular to the central axis, and said seat plate having a peripheral seat zone for sitting in a homogenizer housing, said valve seat member comprising a plurality of holes extending axially through the valve seat plate, wherein at least one hole of said plurality of holes forming a continuous planar mouth edge on one of said end surfaces, wherein the central axis of the valve seat member is positioned outside said mouth edge.

At least two holes of said plurality of holes may have a geometric centroid that lies within its own continuous mouth edge.

The holes may have a uniform peripheral axial extension.

At least two holes may be convex.

The holes may be circular or oval.

The valve seat plate may be circular in a transversal cross-section.

The peripheral seat zone may be a ring-shaped flange, said flange extending axially from the valve seat plate.

The valve seat member may have symmetrical end surfaces.

The circular holes may be positioned centrally of the peripheral seat zone.

The holes may be arranged in at least one concentric circle.

The holes may be arranged in at least three concentric circles.

The density of holes may decrease from the outer most hole in a central direction.

The maximum diameter of the holes may be from 4 to 8 mm, such as from 5 to 7 mm.

The number of holes may be from 50 to 200, such as 75 to 125, such as 100 to 120.

The holes are provided with lips at their edges extending axially from the seat plate.

According to a second aspect it is disclosed a forcer for a homogenizer, said forcer comprising a forcer head, said forcer head having a central axis and at least one end surface perpendicular to the central axis, said forcer comprising a plurality of holes extending axially through the forcer head, wherein at least one hole of said plurality of holes forms a continuous mouth edge on said end surface, wherein the central axis of the forcer head is positioned outside said continuous mouth edge.

At least two holes of said plurality of holes may have a geometric centroid that lies within its own continuous mouth edge.

The holes may have a uniform peripheral axial extension.

At least two holes may be convex.

The holes may be circular or oval.

The forcer head may has symmetrical end surfaces.

The holes may be arranged in at least one concentric circle.

The holes may be arranged in at least three concentric circles.

The density of holes decreases from the outer most hole in a central direction.

The maximum diameter of the holes may be from 4 to 8 mm, such as from 5 to 7 mm.

The number of holes may be from 50 to 200, such as 75 to 125, such as 100 to 120.

The holes may be provided with lips extending axially from the edges of the holes.

According to a third aspect it is disclosed a homogenizer device, comprising a housing, a forcer and a valve seat member with a central axis, said forcer and said valve seat member being positioned within said housing, wherein the forcer and the valve seat member are arranged such that homogenization gaps are created there between, such that a liquid to be homogenized is pushed through holes on said valve seat member or said forcer, wherein the central axis of the valve seat member is positioned outside the boundary of at least one of said gaps.

Either said forcer may be a forcer according to the second aspect or said valve seat member may be a valve seat member according to the first aspect.

Said valve seat member may be a valve seat member according to the first aspect.

Holes may be positioned in correspondence with the periphery of the forcer, such as in correspondence with the periphery of a forcer head of the forcer.

An outer ring of holes may correspond to the peripheral edge of the forcer, such as the forcer head and superimposed on the forcer, such as the forcer head.

The forcer may be displaceable along a central axis thereof, towards and away from the valve seat member.

The forcer may be operated by hydraulics or pneumatics to be displaceable within the housing.

The forcer may have a forcer head that is rotation-symmetrical with the valve seat member.

The gap may be radially disposed.

According to a fourth aspect it is disclosed a method for homogenizing a liquid, comprising the steps of: pushing the liquid through a gap between a forcer and a valve seat member with a central axis, wherein the central axis of the valve seat member is positioned outside the boundary of at least one of said gaps, such that the liquid is homogenized.

### Brief description of the drawings

The invention will below be described more in detail, having reference to a preferred embodiment thereof shown on the accomplishing drawings, in which:
Fig. 1 illustrates a homogenization device;
Fig. 2 illustrates a cross sectional and a front view of a valve seat member according to one embodiment;
Fig. 3 illustrates a cross sectional and a front view of a valve seat member according to another embodiment; and
Fig 4 illustrates a cross sectional and a front view of a valve seat member according to yet another embodiment.

### Detailed description of preferred embodiments

The present invention relates to an arrangement in a homogenizer, and more specifically to a homogenization valve seat member, and a homogenization device, comprising such a valve seat member, a housing, and a forcer, for increasing homogenization capabilities, such as by increasing gap length, cavitation, turbulence, etc.

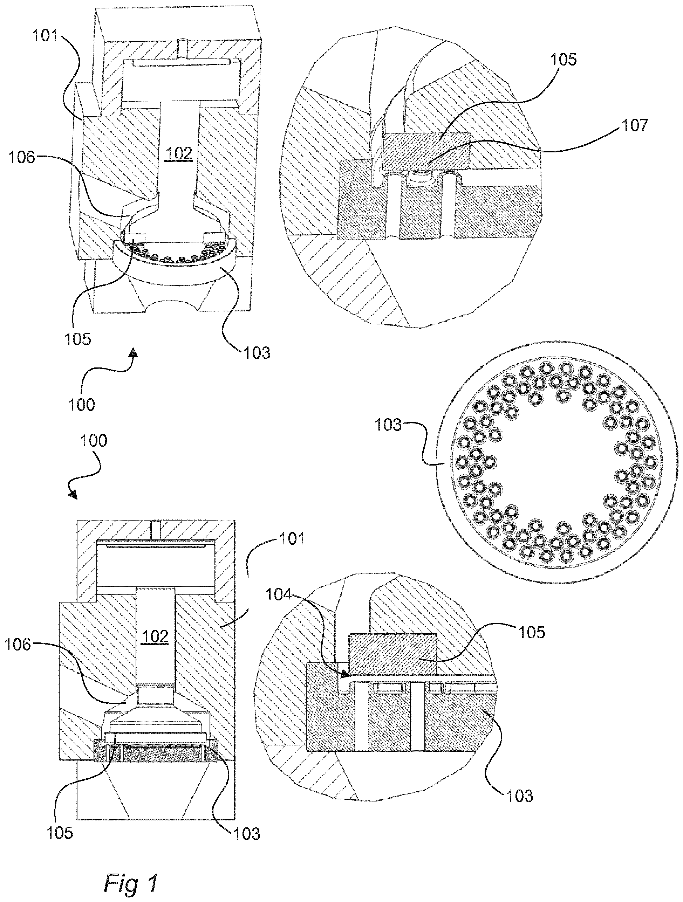

In Fig. 1 a homogenization device, such as a homogenization valve 100, is disclosed. The homogenization valve 100 comprises a housing 101, a forcer 102, and a valve seat member 103. A fluid to be homogenized is forced through the valve seat member 103 and then through a gap 104, created between the valve seat member 103 and a forcer head 105 on the forcer 102, the homogenization effectively taking place in and downstream said gap 104. Downstream the gap 104 a collecting chamber 106 is positioned, from which the fluid to be homogenized exits the homogenization valve 100.

The forcer 102, and thus also the forcer head 105, is displaceable along the central axis thereof. Thus, the height of the gap 104 may be controlled, such that homogenization effect may be adapted in accordance with flow characteristics, such as flow rate, viscosity, etc., of the fluid to be homogenized.

The forcer 102 may be controlled in position in relation to the valve seat member 103 by hydraulics. The forcer 102 may also be pressurized by means of a pneumatics, but may, in simpler versions, be pressurised by means of a set screw which acts via a spring. The forcer 102 is also movable, for example by means of oil in the cylinder, in order to absorb the rapid flow variations which occur in the liquid which is to be homogenized. This elasticity is beneficial to handle the flow variations which naturally occur in piston pumps.

The collecting chamber 106 is hence sealed off along the circumference of the forcer 102 by a suitable seal, such as an o-ring of a suitable food grade rubber. The forcer head 105 may be a separate unit, which is releasably attachable to the forcer 102. This may be accomplished by securing the forcer head 105 to the forcer 102 in a central portion thereof. The forcer head 105 may, for example as shown in Fig. 1, be designed such that it is identical on both sides of a central and transversal plane and is thus reversible, which implies a doubled service life for the forcer head 105 of the forcer 102.

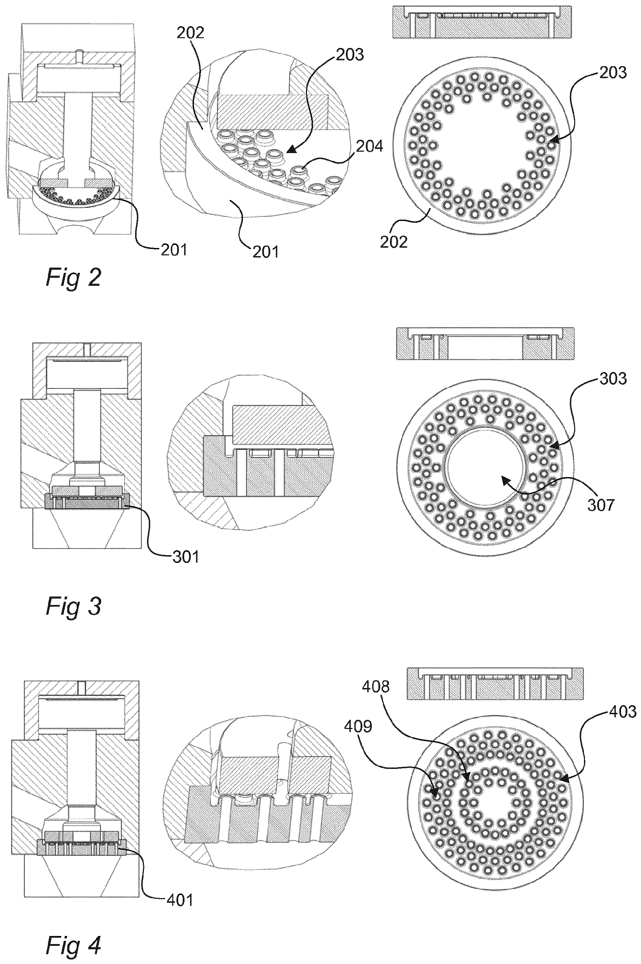

In Fig. 2 an embodiment of valve seat member 103 is disclosed. Although not illustrated, the valve seat member 103 may have symmetrical end surfaces. This means that the valve seat member 103 is symmetrical in respect of a transversal plane thereof. Hence, the valve seat member 103 is designed such that it is identical on both sides of the central and transversal plane thereof, and thus may be reversed in the housing 101. In this way, the valve seat member 103 could be flipped around when a first end side thereof - facing downstream during use - has been worn out, due to the stress during homogenization. The valve seat member 103 comprises a circular valve seat plate 201. At its peripheral zone, the valve seat plate 202 is provided with an interaction flange 202, which is intended to sit in a corresponding cut out in the housing 101. The interaction flange 202 is ring-shaped, is positioned at the peripheral zone of the valve seat member 103, and extends axially from the valve seat plate 201. Preferably, the interaction surface between the housing 101 and the flange 202 is provided with a sealing member, such as an o-ring of a suitable food grade rubber material, such that pressure difference may be obtained between the two sides of the valve seat member 103 in use. To facilitate flipping the valve seat member 103 over after one side of the valve seat member 103 has been worn out, the sealing member is arranged in the housing 101.

A plurality of holes 203 is arranged in a ring within the flange 202, in a position substantially corresponding to the periphery of the forcer head 105. Thus, the holes 203 extend from a first end surface of the valve seat plate 201 to a second end surface of the valve seat plate 201, said end surfaces being perpendicular to a central axis of the valve seat member 103. The holes 203 are arranged in arrays forming concentrical rings, wherein the outer ring of holes 203 substantially corresponds to the peripheral edge of the forcer head 105, and in arranged position being superimposed on the forcer head 105, such that the peripheral parts of the holes 203, in relation to the valve seat plate 201, are positioned adjacent the peripheral edge of the forcer head 105. Thus, the shape of the forcer head 105 in a transversal cross section is circular.

In Fig. 3, a valve seat member according to another embodiment is disclosed. In this embodiment the valve seat plate 301 is provided with a central hole 307, and a plurality of holes 303 arranged in concentrical rings around said central hole 307.

In Fig. 4, a valve seat member according to another embodiment is disclosed. In this embodiment the valve seat plate 401 is provided with several rings of holes 403, wherein a central set of rings of holes 408 are distanced from a peripheral set of rings of holes 409, wherein the distance between the sets of rings of holes correspond to a channels or holes in the forcer.

The holes 203, 303, 403 then have their mouths, and thus end edges, on at least one of first or second end surfaces, preferably both, to form continuous planar boundaries thereon. The holes 203, 303, 403 are arranged such that at least one of said boundaries, formed by said holes, does not enclose the central axis of the valve seat plate 201, 301, 401, i.e. that the central axis of the valve seat plate 201, 301, 401 lies outside a continuous boundary of the end edge of at least one of said holes 203, 303, 403. The holes 203, 303, 403 have a uniform or constant axial extension, such that the holes 203, 303, 403 provide for an adequate gap edge at their hole edges. This means that the depth of the holes 203, 303, 403 through the valve seat plate 201, 301, 401 is uniform and constant. A varying depth or axial extension would render only a part of the hole periphery suitable for homogenization action, since only a part of the hole periphery would allow for a suitable homogenization gap with the forcer 102. The holes 203, 303, 403 or a subset, such as at least two, of said holes 203, 303, 403 have a geometric centroid that lie within the boundaries of each of these holes. Hence, the holes 203 may be convex, such as circular or oval.

The exact number of holes 203, 303, 403 and the diameter thereof may be selected in accordance with the circumstances. Preferably, however, the diameter of the holes 203, 303, 403 is from 4 to 8 mm, such as from 5 to 7 mm. The number of holes may be for example be varied from 50 to 200, such as 75 to 125, such as 100 to 120.

The holes 203, 303, 403 are provided with upper (and lower, to maintain the symmetry in relation to the transversal plane) lips 204, extending axially from the seat plate 201. The lips 204 are continuous around the periphery of the holes 203, 303, 403 with a uniform axial extension, such that the axial extensions of the holes 203, 303, 403 are maintained. In this way the pressure drop from within the holes 203, 303, 403 to downstream the holes 203, 303, 403 beyond the peripheral edge 106 of the forcer head 105 may be sharpened.

A lower interaction surface 107 of the forcer head 105 corresponds in shape with the upper surface of the valve seat member 103, such that the distance between the lips 204 of the holes 203, 303, 403 may be kept substantially constant. It is preferred that the lower interaction surface 107 of the forcer head 105 being superimposed on the holes 203, 303, 403 because of this is flat. Thus, when the seat plate 201, 301, 401 is flat and the axial extension of the lips 204 is constant, and the seat plate 201, 301, 401 and the forcer head 105 are positioned in parallel planes, the distance between the lips 204 and the interaction surface 107 of the forcer head 105 may be kept constant, whereby homogenization characteristics may be well controlled by controlling the position of the forcer 102.

In comparison with concentric channels or a concentric circle to create gap between the seat and the forcer, the arrangement of a plurality of holes 203 increases the gap length significantly.

The valve seat member 103 may be manufactured by milling or casting the valve seat member 103 into a monolithic disc, whereafter the holes 203, 303, 403 are milled or drilled. It is also possible to directly cast the valve seat member 103 with precision casting into a monolithic body with the holes 203, 303, 403. When the holes 203, 303, 403 are cut from a working piece, such as a block of metal, and the holes simultaneously comprises lips 204 extending axially from the seat plate 201, 301, 401, the formation of the lips may need subsequent treatment, such as by grinding or milling, to obtain the suitable characteristics of the lips 204 to allow for sharpening the pressure drop over the gap 104.

The lips 204 constitute the one bounding definition of the homogenization gap 104. The lips 204 may have sharp edges, that is, an inlet angle of approximately 90 degrees and an outlet angle of approximately 90 degrees. Alternatively, the lips may be shaped in a pointed fashion, as illustrated in fig 4. This may be achieved by beveling the edges such that the inlet angle is from 20 to 40 degrees, such as 30 degrees, and the outlet angle is from 35 to 55 degrees, such as 45 degrees. This formation of the lip 204 allows for increased homogenization properties, since a good turbulence and cavitation is obtained, helping the rupture of the fat globules, when for example milk is homogenized.

The forcer 102 is placed in the housing 101 such that there occur, between the forcer 102 and the lips 204 of the valve seat member 103, concentrically disposed homogenization gaps 104. The side of the forcer head 105 facing towards the valve seat member 103 constitutes the second bounding definition of the homogenization gap 104. Also, the forcer head 105 may be provided with through channels or through holes, such as through holes in accordance with the embodiments disclosed above with respect of the valve seat member 103. Thus, the forcer head 105 may be provided with holes in arrangements, sizes, numbers, etc., in accordance with the holes 203, 303, 403 described in view of the valve seat member 103. Such channels or holes may then correspond in position to the position of the holes 203, 303, 403 in the valve seat member 103, such that respective edges of the channels of the forcer head 105 and the holes of the valve seat member 103 overlap each other, creating gaps between the forcer head 105 and the valve seat members formed by the edges of the holes, respectively. In this way, the fluid, such as milk, to be homogenized will have to pass the gap 104 and also change direction; first from the central axis through the holes 203, 303, 403, then radially outwards through the gap 104, and then again into a direction along the central axis of the holes in forcer head 105.

The liquid, normally milk, which is to be homogenized is led into the homogenizer where it is pressurised to approx. 10-25 Mpa. The milk normally has a fat content of 0.5-3.5% and is at a temperature of 55 to 80 degrees Celsius.

The liquid is led into the homogenizer valve 100. When it reaches the valve seat member 103, the liquid is divided, and forced through the holes 203, 303, 403. Thereafter, the liquid passes the gaps 104 formed between the forcer head 105 and the valve seat member 103, where homogenization takes place and the liquid thereafter distributes itself. If the forcer head 105 is provided with through channels or through holes, the liquid will be forced into these openings and around the peripheral edge of the forcer head 105, to realize homogenization. Since the liquid always strives to follow the simplest route, there will be obtained a relatively uniform distribution of liquid through the homogenization gaps 104. After homogenization, the liquid passes out of the homogenizer valve 100.

The gap height is normally 50 to 200 µm. In the passage, there is a very rapid pressure drop, down to 0 Mpa, at the same time as the speed of flow of the liquid increases, with the result that the liquid begins to boil. When the liquid leaves the gap 104, its speed is reduced and the pressure once again increases. The liquid ceases to boil and the vapour bubbles in the liquid implode. The entire process takes place in the space of a few fractions of a second and, in the violent processes where the high speed gives rise to turbulence and cavitation, the fat particles which are in the liquid will be split into smaller particles or globules.

Without further elaboration, it is believed that one skilled in the art can, using the preceding description, utilize the present invention to its fullest extent. The preferred specific embodiments described herein are, therefore, to be construed as merely illustrative and not limitative of the remainder of the description in any way whatsoever. Further, although the present invention has been described above with reference to specific embodiments, it is not intended to be limited to the specific form set forth herein.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality.

## Claims

1. A homogenizer valve seat member (103) with a central axis, comprising a valve seat plate (201, 301, 401), said valve seat plate (201, 301, 401) having two end surfaces perpendicular to the central axis, and said seat plate (201, 301, 401) having a peripheral seat zone (202) for sitting in a homogenizer housing (101), said valve seat member (103) comprising a plurality of holes (203, 303, 403) extending axially through the valve seat plate (201, 301, 401), wherein at least one hole of said plurality of holes (203, 303, 403) forms a continuous planar mouth edge on one of said end surfaces, wherein the central axis of the valve seat member (103) is positioned outside said mouth edge, **characterized in that** the holes (203, 303, 403) are provided with lips (204) at their edges extending axially from the seat plate (201), the lips (204) being continuous around the periphery of the holes (203, 303, 403) with a uniform axial extension.

2. The homogenizer valve seat member (103) according to claim 1, wherein at least two holes of said plurality of holes (203, 303, 403) have a geometric centroid that lies within its own continuous mouth edge.

3. The homogenizer valve seat member (103) according to claim 1 or 2, wherein said holes (203, 303, 403) have a uniform peripheral axial extension.

4. The homogenizer valve seat member (103) according to any of the preceding claims, wherein at least two holes (203, 303, 403) are convex.

5. The homogenizer valve seat member (103) according to any of the preceding claims, wherein said holes (203, 303, 403) are circular or oval.

6. The homogenizer valve seat member (103) according to any of the preceding claims, wherein the valve seat plate (201, 301, 401) is circular in a transversal cross-section.

7. The homogenizer valve seat member (103) according to any of the preceding claims, wherein the peripheral seat zone (202) is a ring-shaped flange (202), said flange (202) extending axially from the valve seat plate (201,301,401).

8. A homogenizer device (100), comprising a housing (101), a forcer (102) and a valve seat member (103) with a central axis according to any of the claims 1-7, said forcer (102) and said valve seat member (103) being positioned within said housing, wherein the forcer (102) and the valve seat member (103) are arranged such that homogenization gaps (104) are created there between, such that a liquid to be homogenized is pushed through holes (203, 303, 403) on said valve seat member (103), wherein the central axis of the valve seat member (103) is positioned outside the boundary of at least one of said gaps (104), and wherein the holes (203, 303, 403) are provided with lips (204) at their edges extending axially from the seat plate (201), the lips (204) being continuous around the periphery of the holes (203, 303, 403) with a uniform axial extension.

9. A method for homogenizing a liquid with a homogenizer device according to claim 8, comprising the steps of: pushing the liquid through a gap (104) between a forcer (102) and a valve seat member (103) with a central axis, wherein the central axis of the valve seat member (103) is positioned outside the boundary of at least one of said gaps (104), such that the liquid is homogenized.

## Patentansprüche

1. Homogenisatorventilsitzelement (103) mit einer Mittelachse, das eine Ventilsitzplatte (201, 301, 401) umfasst, wobei die Ventilsitzplatte (201, 301, 401) zwei zu der Mittelachse rechtwinklige Endflächen aufweist und wobei die Ventilsitzplatte (201, 301, 401) eine umlaufende Sitzzone (202) zum Sitzen in einem Homogenisatorgehäuse (101) aufweist, wobei das Ventilsitzelement (103) eine Vielzahl von Löchern (203, 303, 403) umfasst, die sich axial durch die Ventilsitzplatte (201, 301, 401) erstrecken, wobei wenigstens ein Loch aus der Vielzahl von Löchern (203, 303, 403) einen durchgehenden planaren Mündungsrand auf einer der Endflächen bildet, wobei die Mittelachse des Ventilsitzelements (103) außerhalb des Mündungsrands positioniert ist, **dadurch gekennzeichnet, dass** die Löcher (203, 303, 403) an ihren Rändern mit Lippen (204) versehen sind, die sich axial von der Sitzplatte (201) erstrecken, wobei die Lippen (204) entlang dem Umfang der Löcher (203, 303, 403) mit einer einheitlichen axialen Erstreckung durchgehend sind.

2. Homogenisatorventilsitzelement (103) nach Anspruch 1, wobei wenigstens zwei Löcher aus der Vielzahl von Löchern (203, 303, 403) einen geometrischen Schwerpunkt aufweisen, der innerhalb des eigenen durchgehenden Mündungsrands liegt.

3. Homogenisatorventilsitzelement (103) nach Anspruch 1 oder 2, wobei die Löcher (203, 303, 403) eine einheitliche in Umfangsrichtung verlaufende axiale Erstreckung aufweisen.

4. Homogenisatorventilsitzelement (103) nach einem der vorhergehenden Ansprüche, wobei wenigstens zwei Löcher (203, 303, 403) konvex sind.

5. Homogenisatorventilsitzelement (103) nach einem der vorhergehenden Ansprüche, wobei die Löcher (203, 303, 403) kreisrund oder oval sind.

6. Homogenisatorventilsitzelement (103) nach einem der vorhergehenden Ansprüche, wobei die Ventilsitzplatte (201, 301, 401) in einem quer verlaufenden Querschnitt kreisrund ist.

7. Homogenisatorventilsitzelement (103) nach einem der vorhergehenden Ansprüche, wobei die umlaufende Sitzzone (202) ein ringförmiger Flansch (202) ist, wobei sich der Flansch (202) axial von der Ventilsitzplatte (201, 301, 401) erstreckt.

8. Homogenisatorvorrichtung (100), umfassend ein Gehäuse (101), einen Kolben (102) und ein Ventilsitzelement (103) mit einer Mittelachse nach einem der Ansprüche 1 bis 7, wobei der Kolben (102) und das Ventilsitzelement (103) in dem Gehäuse positioniert sind, wobei der Kolben (102) und das Ventilsitzelement (103) so angeordnet sind, dass Homogenisierungszwischenräume (104) auf eine solche Weise zwischen denselben geschaffen sind, dass eine zu homogenisierende Flüssigkeit durch die Löcher (203, 303, 403) auf dem Ventilsitzelement (103) gedrückt wird, wobei die Mittelachse des Ventilsitzelements (103) außerhalb der Grenze wenigstens eines der Zwischenräume (104) positioniert ist und wobei die Löcher (203, 303, 403) an ihren Rändern mit Lippen (204) versehen sind, die sich axial von der Sitzplatte (201) erstrecken, wobei die Lippen (204) entlang dem Umfang der Löcher (203, 303, 403) mit einer einheitlichen axialen Erstreckung durchgehend sind.

9. Verfahren zum Homogenisieren einer Flüssigkeit mit einer Homogenisatorvorrichtung nach Anspruch 8, umfassend die folgenden Schritte: Drücken der Flüssigkeit durch einen Zwischenraum (104) zwischen einem Kolben (102) und einem Ventilsitzelement (103) mit einer Mittelachse, wobei die Mittelachse des Ventilsitzelements (103) außerhalb der Grenze wenigstens eines der Zwischenräume (104) auf eine solche Weise positioniert ist, dass die Flüssigkeit homogenisiert wird.

## Revendications

1. Élément de siège de vanne d'homogénéiseur (103) avec un axe central, comprenant une plaque de siège de vanne (201, 301, 401), ladite plaque de siège de vanne (201, 301, 401) ayant deux surfaces extrêmes perpendiculaires à l'axe central, et ladite plaque de siège (201, 301, 401) ayant une zone de siège périphérique (202) destinée à être logée dans un corps d'homogénéiseur (101), ledit élément de siège de vanne (103) comprenant une pluralité d'orifices (203, 303, 403) s'étendant axialement à travers la plaque de siège de vanne (201, 301, 401), au moins un orifice de ladite pluralité d'orifices (203, 303, 403) formant un bord d'embouchure plan continu sur une desdites surfaces extrêmes, l'axe central de l'élément de siège de vanne (103) étant positionné à l'extérieur dudit bord d'embouchure,
l'élément de siège de vanne étant **caractérisé en ce que** :
les orifices (203, 303, 403) sont munis de lèvres (204) au niveau de leurs bords s'étendant axialement à partir de la plaque de siège (201), les lèvres (204) étant continues autour de la périphérie des orifices (203, 303, 403) avec une extension axiale uniforme.

2. Élément de siège de vanne d'homogénéiseur (103) selon la revendication 1, dans lequel au moins deux orifices de ladite pluralité de trous (203, 303, 403) ont un centroïde géométrique qui repose dans leur bord d'embouchure continu.

3. Élément de siège de vanne d'homogénéiseur (103) selon la revendication 1 ou 2, dans lequel lesdits orifices (203, 303, 403) ont une extension axiale périphérique uniforme.

4. Élément de siège de vanne d'homogénéiseur (103) selon l'une quelconque des revendications précédentes, dans lequel au moins deux orifices (203, 303, 403) sont convexes.

5. Élément de siège de vanne d'homogénéiseur (103) selon l'une quelconque des revendications précédentes, dans lequel lesdits orifices (203, 303, 403) sont circulaires ou ovales.

6. Élément de siège de vanne d'homogénéiseur (103) selon l'une quelconque des revendications précédentes, dans lequel la plaque de siège de vanne (201, 301, 401) est circulaire dans une section de coupe transversale.

7. Élément de siège de vanne d'homogénéiseur (103) selon l'une quelconque des revendications précédentes, dans lequel la zone de siège périphérique (202) est un rebord en forme d'anneau (202), ledit rebord (202) s'étendant axialement à partir de la plaque de siège de vanne (201, 301, 401).

8. Dispositif homogénéiseur (100), comprenant un corps (101), un élément pousseur (102) et un élément de siège de vanne (103) avec un axe central selon l'une quelconque des revendications 1 à 7, ledit élément pousseur (102) et ledit élément de siège de vanne (103) étant positionnés dans ledit corps, l'élément pousseur (102) et l'élément de siège de vanne (103) étant disposés de sorte que des espaces d'homogénéisation (104) soient créés entre eux, de sorte qu'un liquide à homogénéiser soit poussé à travers les orifices (203, 303, 403) sur ledit élément de siège de vanne (103),
l'axe central de l'élément de siège de vanne (103) étant positionné à l'extérieur des limites d'au moins un desdits espaces (104), et les orifices (203, 303, 403) étant munis, au niveau de leurs bords, de lèvres (204) s'étendant axialement à partir de la plaque de siège (201), les lèvres (204) étant continues autour de la périphérie des orifices (203, 303, 403) avec une extension axiale uniforme.

9. Procédé d'homogénéisation d'un liquide au moyen d'un dispositif homogénéiseur selon la revendication 8, comprenant les étapes consistant à : pousser le liquide à travers un espace (104) entre un élément pousseur (102) et un élément de siège de vanne (103) avec un axe central, l'axe central de l'élément de siège de vanne (103) étant positionné à l'extérieur des limites d'au moins un desdits espaces (104), de sorte que le liquide soit homogénéisé.
